# EUROPEAN PATENT SPECIFICATION

(11) **EP 3 719 074 B1**
(45) Date of publication and mention of the grant of the patent: **06.11.2024**
(21) Application number: 18882555.8
(22) Date of filing: 15.10.2018
(51) Int. Cl.: C08L 77/00, C08L 5/16, C08K 7/02, C08L 77/04, C08L 77/02, C08K 7/14, C08B 37/16

(54) **RESIN COMPOSITION, MOLDED ARTICLE, AND METHOD FOR MANUFACTURING SAME**
HARZZUSAMMENSETZUNG, FORMARTIKEL UND VERFAHREN ZUR HERSTELLUNG DAVON
COMPOSITION DE RÉSINE, ET ARTICLE MOULÉ AINSI QUE PROCÉDÉ DE FABRICATION DE CELUI-CI

(30) Priority: 29.11.2017 JP 2017228649; 27.04.2018 JP 2018086331; 24.08.2018 JP 2018156814
(43) Date of publication of application: 07.10.2020
(73) Proprietor: Toray Industries, Inc., Tokyo 103-8666 (JP)
(72) Inventor: YAMASHITA, Kohei, Nagoya-shi Aichi 455-8502 (JP); TAKAO, Eri, Nagoya-shi Aichi 455-8502 (JP); WAKABAYASHI, Takumi, Nagoya-shi Aichi 455-8502 (JP); TAKAMOTO, Tatsuya, Nagoya-shi Aichi 455-8502 (JP); KOYANAGI, Kohei, Nagoya-shi Aichi 455-8502 (JP); KOBAYASHI, Sadayuki, Nagoya-shi Aichi 455-8502 (JP)
(74) Representative: Mewburn Ellis LLP
(86) International application number: PCT/JP2018/038354
(87) International publication number: WO 2019/106986

(56) References cited:
- WO-A1-2016/167247
- WO-A1-2016/167247
- CN-A- 105 199 400
- JP-A- 2006 517 599
- JP-A- 2007 314 698
- JP-A- 2008 266 622
- MEISAM SHABANIAN ET AL: "Bio-based semi-aromatic polyamide/functional clay nanocomposites: preparation and properties", RSC ADVANCES, vol. 4, 2 May 2014 (2014-05-02), pages 23420 - 23427, XP055616119, DOI: 10.1039/c4ra02949f
- SHABANIAN, M. ET AL.: "Bio-based semi-aromatic polyamide/functional clay nanocomposites: preparation and properties", RSC ADV., vol. 4, 2 May 2014 (2014-05-02), pages 23420 - 23427, XP055616119
- MBULI, B. S. ET AL.: "Fouling Resistance and Physicochemical Properties of Polyamide Thin-Film Composite Membranes Modified with Functionalized Cyclodextrins", ADVANCES IN POLYMER TECHNOLOGY, vol. 36, no. 2, 20 June 2016 (2016-06-20), pages (21720) 1 - 12, XP055616123

## Description

### TECHNICAL FIELD

The present invention relates to a polyamide resin composition which comprises a polyamide and a modified cyclodextrin and which can provide a molded article having an excellent balance between rigidity and toughness, a molded article obtained by molding the polyamide resin composition, and a production method thereof.

### BACKGROUND ART

Since polyamides have properties suitable for engineering plastics such as excellent mechanical properties including rigidity and toughness and thermal properties, the polyamides have been widely used for a variety of electric and electronic parts, machine parts, automobile parts, and the like, mostly by injection molding. As a method for further improving the toughness of a polyamide resin, it is known to blend an olefin-based elastomer or a core-shell compound in which a rubber-like core layer is covered with a shell layer of a glass-like resin. As a technique for blending the olefin-based elastomer, for example, a polyamide-based resin composition has been proposed, which is composed of a continuous phase composed of a polyamide resin and a particulate dispersed phase which is composed of a polyolefin modified with an α,β-unsaturated carboxylic acid and is dispersed in the continuous phase (See, for example, Patent Document 1). As a technique for blending the core-shell compound, for example, an impact resistant thermoplastic resin composition composed of a composite rubber-based graft copolymer and a thermoplastic resin has been proposed, wherein the composite rubber-based graft copolymer is obtained by graft polymerization of vinyl-based monomers onto polymer particles with a multi-layered structure having polyalkyl(meth)acrylate as a core, a first layer composed of polyorganosiloxane and a second layer composed of polyalkyl(meth)acrylate thereon (for example, see Patent Document 2). A polyamide resin composition composed of a polyamide resin and resin beads having a core-shell structure has been also proposed, wherein the polyamide resin is composed of a dicarboxylic acid unit containing a terephthalic acid unit and a diamine unit containing a 1,9-nonanediamine unit and/or 2-methyl-1,8-octanediamine unit (for example, see Patent Document 3).

On the other hand, as a method for improving impact strength and toughness, for example, a resin composition obtained by reacting a polyolefin modified with an unsaturated carboxylic anhydride with a polyrotaxane having a functional group (for example, see Patent Document 4), and a polylactic acid-based resin composition comprising a polyrotaxane in which an opening of a cyclic molecule having a graft chain composed of polylactic acid is threaded onto a linear molecule and a polylactic acid resin (for example, see Patent Document 5) have been proposed. Patent Document 6 describes a resin composition and proposes a method for greatly improving the toughness of a polyamide by adding a polyrotaxane. Non-patent document 1 describes the synthesis of a functionalized β-cyclodextrin and tris(3-aminophenyl) phenyl phosphine oxide which are used in the preparation of organoclays. These organoclays are then used to prepare biobased semi-aromatic polyamide nanocomposites via solution blending.

### [PRIOR ART REFERENCES]

### [PATENT DOCUMENTS]

Patent Document 1: JP H09-31325 A
Patent Document 2: JP H05-339462 A
Patent Document 3: JP 2000-186204 A
Patent Document 4: JP 2013-209460 A
Patent Document 5: JP 2014-84414 A
Patent Document 6: WO 2016/167247
Non-Patent Document 1: Shabanian et al., RSC Adv., 2014, 4, 23420-23427, Biobased semi-aromatic polyamide/functional clay nanocomposites: preparation and properties

### [SUMMARY OF THE INVENTION]

### [PROBLEMS TO BE SOLVED BY THE INVENTION]

When the resin composition is applied to various uses, particularly to automobile structural materials, it is necessary to achieve both rigidity and toughness. The resin compositions disclosed in Patent Documents 1 to 3 have improved impact resistance and toughness by blending an olefin-based elastomer or a core-shell compound, but also have a problem of reduced rigidity. As disclosed in Patent Documents 4 and 5, it has been known that the use of a polyrotaxane improves the impact strength and toughness of a polyolefin or polylactic acid. However, polyrotaxanes described therein have low compatibility and reactivity with polyamides, and it has been difficult to apply such polyrotaxanes to the modification of polyamide for excellent rigidity. As a technique for achieving both toughness and rigidity of a molded article, a resin composition comprising a polyamide and a modified polyrotaxane has been proposed (Patent Document 6). However, although the resin composition described in Patent Document 6 has an excellent balance between toughness and rigidity, further improvement in toughness is required, and there has also been a problem of a synthesis cost of the raw material, polyrotaxane.

One object of the present invention is, in view of the above-mentioned problems of the background art, to provide a resin composition whose raw materials are inexpensive and which can provide a molded article having an excellent balance between rigidity and toughness.

### [MEANS FOR SOLVING THE PROBLEMS]

In order to solve the above problems, the present invention has the following structures.

A resin composition comprising at least a polyamide (A) and a modified cyclodextrin (B), wherein said modified cyclodextrin (B) is modified with a thermoplastic resin, and wherein the polyamide (A) is blended in an amount of 80 parts by weight or more and 99.9 parts by weight or less and the modified cyclodextrin (B) is blended in an amount of 0.1 parts by weight or more and 20 parts by weight or less with respect to 100 parts by weight in total of the polyamide (A) and the modified cyclodextrin (B), and wherein the modified cyclodextrin (B) is not cyclodextrin that forms part of a polyrotaxane.

A molded article obtained by molding the resin composition.

A method of producing the resin composition, comprising at least melt kneading the polyamide (A) and the modified cyclodextrin (B).

### [EFFECT OF THE INVENTION]

The resin composition of the present invention can provide a molded article whose raw materials are inexpensive and which has an excellent balance between rigidity and toughness. Further, even in the case of a resin composition to which a fibrous filler is added (fiber-reinforced resin composition), the toughness can be improved while the rigidity is maintained. Thus, a molded article which is excellent in energy absorption can be obtained.

### [MODE FOR CARRYING OUT THE INVENTION]

The present invention will be described in detail below.

The resin composition of the present invention comprises at least a polyamide (A) and a modified cyclodextrin (B). By blending the polyamide (A), the rigidity and heat resistance can be improved. By blending the modified cyclodextrin (B), the toughness can be improved. The resin composition of the present invention comprises a product obtained from a reaction of the component (A) with the component (B) in addition to the component (A) and the component (B), but the identification of the structure of the reaction product is not practical. Therefore, the present invention is identified by the components to be blended.

The polyamide (A) in the resin composition of the present invention comprises a residue of an amino acid, a lactam or a diamine, and a dicarboxylic acid as main constituent component. Representative examples of the raw materials include amino acids such as 6-aminocaproic acid, 11-aminoundecanoic acid, 12-aminododecanoic acid, and para-aminomethylbenzoic acid, lactams such as ε-aminocaprolactam and ω-laurolactam, aliphatic diamines such as tetramethylenediamine, pentamethylenediamine, hexamethylenediamine, 2-methylpentamethylenediamine, nonamethylenediamine, decamethylenediamine, undecamethylenediamine, dodecamethylenediamine, 2,2,4-/2,4,4-trimethylhexamethylenediamine, and 5-methylnonamethylenediamine, aromatic diamines such as meta- xylylenediamine, and para-xylylenediamine, alicylic diamines such as 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethylpiperazine, aliphatic dicarboxylic acids such as adipic acid, suberic acid, azelaic acid, sebacic acid, and dodecanedioic acid, aromatic dicarboxylic acids such as terephthalic acid, isophthalic acid, 2-chloroterephthalic acid, 2-methylterephthalic acid, 5-methylisophthalic acid, 5-sodium-sulfoisophthalic acid, 2,6-naphthalenedicarboxylic acid, hexahydroterephthalic acid, and hexahydroisophthalic acid, alicyclic dicarboxylic acids such as 1,4-cyclohexanedicarboxylic acid, 1,3-cyclohexanedicarboxylic acid, 1,2-cyclohexanedicarboxylic acid, and 1,3-cyclopentanedicarboxylic acid, and the like. In the present invention, two or more kinds of polyamide homopolymers or copolymers derived from these raw materials may be blended.

Specific examples of the polyamide (A) include polycaproamide (nylon 6), polyhexamethylene adipamide (nylon 66), polytetramethylene adipamide (nylon 46), polytetramethylene sebacamide (nylon 410), polypentamethylene adipamide (nylon 56), polypentamethylene sebacamide (nylon 510), polyhexamethylene sebacamide (nylon 610), polyhexamethylene dodecamide (nylon 612), polydecamethylene adipamide (nylon 106), polydecamethylene sebacamide (nylon 1010), polydecamethylene dodecamide (nylon 1012), polyundecaneamide (nylon 11), polydodecanamide (nylon 12), polycaproamide/polyhexamethylene adipamide copolymers (nylon 6/66), polycaproamide/polyhexamethylene terephthalamide copolymers (nylon 6/6T), polyhexamethylene adipamide/polyhexamethylene terephthalamide copolymers (nylon 66/6T), polyhexamethylene adipamide/polyhexamethylene isophthalamide copolymers (nylon 66/6I), polyhexamethylene terephthalamide/polyhexamethylene isophthalamide copolymers (nylon 6T/6I), polyhexamethylene terephthalamide/polydodecanamide copolymers (nylon 6T/12), polyhexamethylene adipamide/polyhexamethylene terephthalamide/polyhexamethylene isophthalamide copolymers (nylon 66/6T/6I), polyxylylene adipamide (nylon XD6), polyxylylene sebacamide (nylon XD10), polyhexamethylene terephthalamide/polypentamethylene terephthalamide copolymers (nylon 6T/5T), polyhexamethylene terephthalamide/poly-2-methylpentamethylene terephthalamide copolymers (nylon 6T/M5T), polypentamethylene terephthalamide/polydecamethylene terephthalamide copolymers (nylon 5T/10T), polynonamethylene terephthalamide (nylon 9T), polydecamethylene terephthalamide (nylon 10T), polydodecamethylene terephthalamide (nylon 12T), copolymers thereof, and the like. Two kinds or more of these can be blended. As used herein, "/" represents a copolymer and used in the same way hereinafter.

In the resin composition of the present invention, the melting point of the polyamide (A) is preferably 150°C or more and less than 300°C. When the melting point is 150°C or more, heat resistance can be improved. On the other hand, when the melting point is less than 300°C, the processing temperature during the production of the resin composition can be appropriately suppressed, and the thermal decomposition of the modified cyclodextrin (B) can be prevented.

The melting point of the polyamide in the present invention is determined using a differential scanning calorimeter, and defined as the temperature of an endothermic peak which is observed when, under an inert gas atmosphere, the polyamide in a molten state is cooled to 30°C at a rate of 20°C/min, and then heated to the temperature of the melting point + 40°C at a rate of 20°C/min. When two or more endothermic peaks are detected, the temperature of the endothermic peak having the highest peak intensity is defined as the melting point.

Specific examples of the polyamide having a melting point of 150°C or more and less than 300°C include polycaproamide (nylon 6), polyhexamethylene adipamide (nylon 66), polypentamethylene adipamide (nylon 56), polytetramethylene adipamide (nylon 46), polyhexamethylene sebacamide (nylon 610), polyhexamethylene dodecamide (nylon 612), polyundecaneamide (nylon 11), polydodecanamide (nylon 12), polycaproamide/polyhexamethylene adipamide copolymers (nylon 6/66), polycaproamide/polyhexamethylene terephthalamide copolymers (nylon 6/6T), polyhexamethylene adipamide/polyhexamethylene isophthalamide copolymers (nylon 66/6I), polyhexamethylene terephthalamide/polyhexamethylene isophthalamide copolymers (nylon 6T/6I), polyhexamethylene terephthalamide/polydodecanamide copolymers (nylon 6T/12), polyhexamethylene adipamide/polyhexamethylene terephthalamide/polyhexamethylene isophthalamide copolymers (nylon 66/6T/6I), polyxylylene adipamide (nylon XD6), polyhexamethylene terephthalamide/poly-2-methylpentamethylene terephthalamide copolymers (nylon 6T/M5T), polynonamethylene terephthalamide (nylon 9T), copolymers thereof, and the like. Two kinds or more of these can be blended.

The degree of polymerization of the polyamide (A) is not particularly limited, and the relative viscosity measured at 25°C in a 98% solution of concentrated sulfuric acid having a resin concentration of 0.01 g/ml is preferably in the range of 1.5 to 5.0. When the relative viscosity is 1.5 or more, the toughness, rigidity, wear resistance, fatigue resistance, and creep resistance of the resulting molded article can be further improved. The relative viscosity of the polyamide (A) is more preferably 2.0 or more. On the other hand, when the relative viscosity is 5.0 or less, the moldability is excellent since the fluidity is good.

In the resin composition of the present invention, the polyamide (A) is preferably not biodegradable. When the polyamide (A) is not biodegradable, durability can be improved.

The blending amount of the polyamide (A) in the resin composition of the present invention is 80 parts by weight or more and 99.9 parts by weight or less with respect to 100 parts by weight in total of the polyamide (A) and the modified cyclodextrin (B). When the blending amount of the polyamide (A) is less than 80 parts by weight, the rigidity and heat resistance of the resulting molded article decrease. The blending amount of the polyamide (A) is preferably 90 parts by weight or more, and more preferably 93 parts by weight or more. On the other hand, when the blending amount of the polyamide (A) exceeds 99.9 parts by weight, the blending amount of the modified cyclodextrin (B) is relatively small, resulting in decreased toughness of the molded article. The blending amount of the polyamide (A) is preferably 99.5 parts by weight or less.

The resin composition of the present invention comprises a modified cyclodextrin (B), wherein said modified cyclodextrin (B) is modified with a thermoplastic resin.

The modified cyclodextrin is a compound represented by the formula (a), and is a compound in which glucose constituting the cyclodextrin is modified with a functional group R. 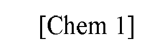 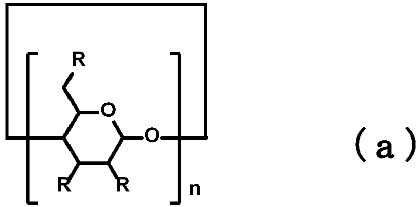 (n is an integer of 6 to 8, R is functional group selected from hydroxyl group, and at least one or more hydroxypropoxy groups, methoxy groups, alkoxy groups having 2 or more carbon atoms, polyalkylene glycol, thermoplastic resins, polyalkylene glycol via a hydroxypropoxy group, thermoplastic resins via a hydroxypropoxy group and thermoplastic resins via an alkylamine. R may be the same or different. The case in which R are all hydroxyl groups is excluded).

Modified cyclodextrin is obtained by modifying cyclodextrin. Examples of cyclodextrin include α-cyclodextrin, β-cyclodextrin, and γ-cyclodextrin. Among them, β-cyclodextrin and γ-cyclodextrin are more preferably used. By using these preferred cyclodextrins, the resulting molded article exhibits good toughness.

The modified cyclodextrin is obtained by chemically modifying and converting a hydroxyl group of glucose, which is a basic skeleton constituting cyclodextrin. More specifically, examples thereof include a modified cyclodextrin in which cyclodextrin and a thermoplastic resin are bound without a linking group, and a modified cyclodextrin in which cyclodextrin and a thermoplastic resin are bound via a linking group. Specific examples thereof include a modified cyclodextrin containing a thermoplastic resin via a hydroxypropoxy group, and a modified cyclodextrin containing a thermoplastic resin via an alkylamine. "Via a hydroxypropoxy group" herein means that the -R group in the general formula (a) has a structure of -O-CH₂-CHOR'-CH₃. The thermoplastic resin via a hydroxypropyl group indicates that the R' is the thermoplastic resin. Furthermore, "via an alkylamine" means that the -R group in the general formula (a) has a structure of -O-CH₂-CH₂-CH₂-NH-R' or -NH-CH₂-CH₂NH-R', and the thermoplastic resin via an alkylamine indicates that the R' is the thermoplastic resin. Examples of the thermoplastic resin include aliphatic polyesters and aliphatic polyamides.

Examples of the aliphatic polyesters include polylactic acid, polyglycolic acid, poly-3-hydroxybutyrate, poly4-hydroxybutyrate, poly(3-hydroxybutyrate/3-hydroxyvalerate), poly(ε-caprolactone) and the like. Two kinds or more of these can be combined. Among these, from the viewpoint of toughness exhibited by the resulting molded article, those modified with a hydroxypropoxy group, a methoxy group, or both of the hydroxypropoxy group and poly(ε-caprolactone) are preferred. Cyclodextrin modified with both of the hydroxypropoxy group and poly(ε-caprolactone) is particularly preferably used. Examples of the aliphatic polyamides include polycaproamide (nylon 6), polyhexamethylene adipamide (nylon 66), polyundecaneamide (nylon 11), polydodecaneamide (nylon 12), and the like. Two kinds or more of these can be combined. Among these, from the viewpoint of compatibility with the polyamide (A), cyclodextrin modified with a hydroxypropoxy group, a methoxy group, or both of the hydroxypropoxy group and polycaproamide is particularly preferably used.

The molecular weight of the thermoplastic resin that modifies the cyclodextrin is not particularly limited, but as an example, the number average molecular weight can be in the range of 100 or more and 100,000 or less. Especially, the range of 100 or more and 10,000 or less is preferred, and the range of 100 or more and 2,000 or less can be illustrated as a more preferred range. When the molecular weight of the thermoplastic resin is in such a preferred range, the viscosity of the modified cyclodextrin (B) decreases, which facilitates the melt kneading with the polyamide (A).

The number average molecular weight of the modified cyclodextrin (B) of the present invention is not particularly limited, but as an example, the number average molecular weight can be in the range of 950 or more and 100,000 or less, and the range of 1,000 or more and 50,000 or less is preferred. The number average molecular weight of the modified cyclodextrin (B) in such a preferred range facilitates the melt kneading with the polyamide (A).

The blending amount of the modified cyclodextrin (B) in the resin composition of the present invention is 0.1 parts by weight or more and 20 parts by weight or less with respect to 100 parts by weight in total of the polyamide (A) and the modified cyclodextrin (B). When the blending amount of the modified cyclodextrin (B) is less than 0.1 parts by weight, the stress relaxation effect of the modified cyclodextrin (B) is not sufficiently exhibited, and the toughness of the molded article is reduced. The blending amount of the modified cyclodextrin (B) is preferably 0.5 parts by weight or more. On the other hand, when the blending amount of the modified cyclodextrin (B) exceeds 20 parts by weight, the blending amount of the polyamide (A) is relatively small, resulting in decreased rigidity and heat resistance of the resulting molded article. The blending amount of the modified cyclodextrin (B) is preferably 10 parts by weight or less, and more preferably 7 parts by weight or less. When the blending amount of the modified cyclodextrin is in these preferred ranges, a resin composition having an excellent balance between rigidity and toughness and a molded article thereof can be obtained.

The resin composition of the present invention can further comprise a fibrous filler (C). By blending the fibrous filler (C), a molded article having excellent dimensional stability as well as excellent mechanical properties such as strength and rigidity can be obtained.

As the fibrous filler (C), any filler having a fibrous shape can be used. Specific examples thereof include glass fibers, polyacrylonitrile (PAN)-based or pitch-based carbon fibers, metal fibers such as stainless steel fibers, aluminum fibers and brass fibers, organic fibers such as polyester fibers and aromatic polyamide fibers, fibrous or whisker-like fillers such as gypsum fibers, ceramic fibers, asbestos fibers, zirconia fibers, alumina fibers, silica fibers, titanium oxide fibers, silicon carbide fibers, rock wool, potassium titanate whiskers, silicon nitride whiskers, wollastenite, alumina silicate, and glass fibers, carbon fibers, aromatic polyamide fibers, and polyester fibers coated with one or more metals selected from the group consisting of nickel, copper, cobalt, silver, aluminum, iron and alloys thereof, and the like. Two kinds or more of these can be contained.

Among the fibrous fillers, glass fibers, carbon fibers, stainless steel fibers, aluminum fibers, and aromatic polyamide fibers are preferably used from the viewpoint of further improved strength, rigidity and surface appearance of the molded article. Furthermore, in order to achieve a resin composition having an excellent balance between the mechanical properties of the molded article such as rigidity and strength, and the fluidity of the resin composition, glass fibers or carbon fibers are particularly preferably used.

Further, as the fibrous filler (C), those having a coupling agent, a sizing agent, or the like attached to the surface may be used. By attaching a coupling agent or a sizing agent, wettability with respect to the polyamide (A) and the handling property of the fibrous filler (C) can be improved. Examples of the coupling agent include an amino-based, epoxy-based, chloro-based, mercapto-based, and cation-based silane coupling agents, and an amino-based silane coupling agent can be preferably used. Examples of the sizing agent include sizing agents containing a carboxylic acid-based compound, a maleic anhydride-based compound, a urethane-based compound, an acrylic-based compound, an epoxy-based compound, a phenol-based compound and/or a derivative of these compounds.

In the resin composition of the present invention comprising at least a polyamide (A), a modified cyclodextrin (B), and a fibrous filler (C), the content of the fibrous filler (C) is preferably 1 to 200 parts by weight with respect to 100 parts by weight in total of the polyamide (A) and the modified cyclodextrin (B). When the content of the fibrous filler (C) is 1 part by weight or more, the effect of improving the mechanical properties and dimensional stability of the molded article can be obtained. The content of the fibrous filler (C) is more preferably 10 parts by weight or more, and further preferably 20 parts by weight or more. On the other hand, when the content of the fibrous filler (C) is 200 parts by weight or less, a molded article excellent in surface appearance can be obtained without unevenness of the fibrous filler (C) on the surface of the molded article. The content of the fibrous filler (C) is more preferably 175 parts by weight or less, further preferably 150 parts by weight or less.

The resin composition according to the present invention can further comprise a filler other than the fibrous filler (C), a thermoplastic resin other than a polyamide, and a variety of additives, and the like as long as the effect of the present invention is not impaired.

By blending a filler other than the fibrous filler (C), strength and rigidity of the resulting molded article can be further improved. Examples of the filler other than the fibrous filler (C) include any of organic fillers and inorganic fillers, and non-fibrous fillers, and two or more of these may be blended.

Examples of the non-fibrous fillers include non-swellable silicates such as talc, wollastenite, zeolite, sericite, mica, kaolin, clay, pyrophyllite, bentonite, asbestos, alumina silicate and calcium silicate, swellable layered silicates such as Li-type fluorine teniolite, Na-type fluorine teniolite, and swellable mica of Na-type tetrasilicon fluoromica and Li-type tetrasilicon fluoromica, metal oxides such as silicon oxide, magnesium oxide, alumina, silica, diatomaceous earth, zirconium oxide, titanium oxide, iron oxide, zinc oxide, calcium oxide, tin oxide, and antimony oxide, metal carbonates such as calcium carbonate, magnesium carbonate, zinc carbonate, barium carbonate, dolomite and hydrotalcite, metal sulfates such as calcium sulfate and barium sulfate, metal hydroxides such as magnesium hydroxide, calcium hydroxide, aluminum hydroxide and basic magnesium carbonate, smectitebased clay minerals such as montmorillonite, beidellite, nontronite, saponite, hectorite, and sauconite, various clay minerals such as vermiculite, halloysite, kanemite, kenyaite, zirconium phosphate, and titanium phosphate, glass beads, glass flakes, ceramic beads, boron nitride, aluminum nitride, silicon carbide, calcium phosphate, carbon black, graphite, and the like. In the above-mentioned swellable layered silicates, exchangeable cations present between layers may be exchanged with organic onium ions. Examples of the organic onium ions include ammonium ions, phosphonium ions, sulfonium ions and the like.

Specific examples of the thermoplastic resin other than a polyamide include polyester resins, polyolefin resins, modified polyphenylene ether resins, polysulfone resins, polyketone resins, polyetherimide resins, polyarylate resins, polyethersulfone resins, polyetherketone resins, polythioetherketone resins, polyether ether ketone resins, polyimide resins, polyamide imide resins, polyethylene tetrafluoride resins, and the like. Two kinds or more of these can be blended. The blending amount of the thermoplastic resin other than a polyamide is preferably 30 parts by weight or less with respect to 100 parts by weight of the polyamide (A) of the present invention.

Specific examples of a variety of additives include heat stabilizers other than copper compounds, coupling agents such as isocyanate-based compounds, organic silane-based compounds, organic titanate-based compounds, organic borane-based compounds, and epoxy compounds, plasticizers such as polyalkylene oxide oligomer-based compounds, thioether-based compounds, ester-based compounds, and organic phosphorus-based compounds, nucleating agents such as organophosphorus compounds and polyether ether ketones, montanic acid waxes, metal soaps such as lithium stearate and aluminum stearate, mold release agents such as ethylenediamine- stearic acid sebacic acid polycondensation products and siliconebased compounds, anti-coloration agents such as hypophosphite salts, lubricants, ultraviolet inhibitors, coloring agents, flame retardants, foaming agents, and the like.

Examples of heat stabilizers other than copper compounds include phenol-based compounds such as N,N'-hexamethylenebis(3,5-di-t-butyl-4-hydroxyhydrocinnamide) and tetrakis[methylene-3-(3',5'-di-t-butyl-4'-hydroxyphenyl)propionate]methane, phosphorus-based compounds, mercaptobenzimidazole-based compounds, dithiocarbamic acid-based compounds, sulfur-based compounds such as organic thioacid-based compounds, amine-based compounds such as N,N'-di-2-naphthyl-p-phenylenediamine and 4,4'-bis(α,α-dimethylbenzyl)diphenylamine, and the like. Two kinds or more of these can be blended.

When these additives are blended, the blending amount is preferably 10 parts by weight or less, more preferably 1 part by weight or less with respect to 100 parts by weight of the polyamide (A) so that the characteristics of the polyamide will be sufficiently exhibited.

The resin composition of the present invention is produced by melt kneading a polyamide (A) and a modified cyclodextrin (B). Examples of the melt kneading apparatus include an extruder such as a single-screw extruder, a multiple-screw extruder including a twin-screw extruder, a quad-screw extruder, and a twin-screw/single-screw composite extruder, a kneader, and the like. From the viewpoint of productivity, an extruder which is capable of continuous production is preferred, and from the viewpoint of improved kneading properties and productivity, a twin-screw extruder is more preferred.

Next, an example method of producing the resin composition of the present invention using a twin-screw extruder will be described. In order to prevent thermal deterioration of the modified cyclodextrin (B) and improve further toughness of the modified cyclodextrin (B), the maximum resin temperature is preferably 300°C or less. On the other hand, the maximum resin temperature is preferably the melting point of the polyamide (A) or more. The maximum resin temperature herein refers to the highest temperature measured by resin thermometers evenly installed at several locations of the extruder.

The resin composition thus obtained can be molded by a commonly known method, and various molded articles such as sheets and films can be obtained. Examples of the molding method include injection molding, injection compression molding, extrusion molding, compression molding, blow molding, press molding, and the like.

By virtue of the excellent properties, the resin composition of the present invention and the molded article thereof can be used for various applications such as automobile parts, electric and electronic parts, building members, various containers, daily necessities, household goods, sanitary goods and the like. In particular, the resin composition of the present invention and the molded article thereof are particularly preferably used for parts that require toughness and rigidity, including automotive exterior parts, automotive electrical parts, automotive parts under the hood, automotive gear parts, electric and electronic parts such as housings, connectors, and reflectors. Specific examples thereof suitably include automotive engine peripheral parts such as an engine cover, an air intake pipe, a timing belt cover, an intake manifold, a filler cap, a throttle body, and a cooling fan, automotive parts under the hood such as a cooling fan, top and base radiator tank, a cylinder head cover, an oil pan, brake piping, a fuel piping tube, and an exhaust gas system part, automotive gear parts such as a gear, an actuator, a bearing retainer, a bearing cage, a chain guide, and a chain tensioner, automotive interior parts such as a shift lever bracket, a steering lock bracket, a key cylinder, an interior door handle, a door handle cowl, an interior mirror bracket, an air conditioner switch, an instrument panel, a console box, a glove compartment, a steering wheel, and a trim, automotive exterior parts such as a front fender, a rear fender, a fuel lid, a door panel, a cylinder head cover, a door mirror stay, a tailgate panel, a license garnish, a roof rail, an engine mount bracket, a rear garnish, a rear spoiler, a trunk lid, a rocker molding, a molding, a lamp housing, a front grille, a mudguard, a side bumper, and a crash box, exhaust system parts such as an air intake manifold, an intercooler inlet, an exhaust pipe cover, an inner bush, a bearing retainer, an engine mount, an engine head cover, a resonator, and a throttle body, engine cooling water system parts such as a chain cover, a thermostat housing, an outlet pipe, a radiator tank, an alternator, and a delivery pipe, automotive electrical parts such as a connector, a wire harness connector, a motor part, a lamp socket, a sensor in-vehicle switch, and a combination switch, electrical and electronic parts such as an SMT-compatible connector, a socket, a card connector, a jack, a power supply, a switch, a sensor, a condenser seat, a relay, a resistor, a fuse holder, a coil bobbin, IC and LED compatible housing, and a reflector.

### EXAMPLES

The present invention is explained below by way of Examples. The following raw materials were used to obtain the resin compositions of each Example.

### <Polyamide>

(A-1): Nylon 6 resin ("Amilan" (registered trademark) manufactured by TORAY Industries, Inc.), ηr = 2.70, melting point: 225°C.

The relative viscosity ηr herein was measured at 25°C in a 98% concentrated sulfuric acid solution with a concentration of 0.01 g/ml. The melting point was determined using a differential scanning calorimeter, and defined as the temperature of an endothermic peak which was observed when, under an inert gas atmosphere, the polyamide in a molten state was cooled to 30°C at a rate of 20°C/min, and then heated to the temperature of the melting point + 40°C at a rate of 20°C/min. However, when two or more endothermic peaks were detected, the temperature of the endothermic peak having the highest peak intensity was taken as the melting point.

### <Modified cyclodextrin>

(B-1): (2-hydroxypropyl)-alpha-cyclodextrin (manufactured by Sigma-Aldrich) was modified with polycaprolactone according to the method described in Reference Example 1.
(B-2): (2-hydroxypropyl)-beta-cyclodextrin (manufactured by Sigma-Aldrich) was modified with polycaprolactone according to the method described in Reference Example 2.
(B-3): (2-hydroxypropyl)-gamma-cyclodextrin (manufactured by Sigma-Aldrich) was modified with polycaprolactone according to the method described in Reference Example 3.
(B-4): (2-hydroxypropyl)-beta-cyclodextrin (HPβCD; manufactured by Sigma-Aldrich)
(B-5): β-cyclodextrin (manufactured by Junsei Chemical Co., Ltd.) was modified with polycaproamide according to the method described in Reference Example 4.
(B-6): (2-hydroxypropyl)-beta-cyclodextrin (manufactured by Sigma-Aldrich) was modified with polycaproamide according to the method described in Reference Example 5.

### <Fibrous filler>

(C-1): Glass fiber (T-251H manufactured by Nippon Electric Glass Co., Ltd.)
(C-2): Glass fiber (T-249 manufactured by Nippon Electric Glass Co., Ltd.)

### <Other components>

(B'-1): Polycaprolactone (PCL; Placcel 210N manufactured by Daicel Corporation) Linear polycaprolactone having a number average molecular weight of 1,000
(B'-2): α-cyclodextrin (manufactured by Junsei Chemical Co., Ltd.)
(B'-3): β-cyclodextrin (manufactured by Junsei Chemical Co., Ltd.)
(B'-4): Polyrotaxane ("Serum" (registered trademark) superpolymer SH2400P manufactured by Advanced Softmaterials Inc.). The number average molecular weight of linear polyethylene glycol is 20,000, and the total weight average molecular weight is 400,000.

The weight average molecular weight of the polyrotaxane is a value in terms of polymethyl methacrylate, determined by gel permeation chromatography using hexafluoroisopropanol as a solvent, and Sodex HFIP-806M (x2) + HFIP-LG as columns.

### (Reference Example 1)

Three grams of (2-hydroxypropyl)-alpha-cyclodextrin and 30.9 g of ε-caprolactone were placed in a three-necked flask, and nitrogen was flowed into the flask. After the reaction solution was stirred in an oil bath at 110°C for 1 hour, the temperature of the oil bath was raised to 130°C, and a solution obtained by dissolving 0.18 g of tin (II) octylate in 1.5 g of toluene was added dropwise to the reaction solution. After heating and stirring in an oil bath at 130°C for 6 hours, heating was stopped, and 45 mL of toluene was added to dissolve the reaction product, and the resulting mixture was poured into 600 mL of hexane for reprecipitation. The obtained reaction product was collected and dried in vacuum at 80°C for 10 hours. The number average molecular weight of the obtained compound was 24,000. The number average molecular weight of the modified cyclodextrin is a value in terms of polymethyl methacrylate, determined by gel permeation chromatography using dimethylformamide as a solvent, and Shodex GPC KF805L as a column.

### (Reference Example 2)

The same operation as in Reference Example 1 was performed except that (2-hydroxypropyl)-beta-cyclodextrin was used instead of (2-hydroxypropyl)-alpha-cyclodextrin, and 27.5 g of ε-caprolactone was used. The number average molecular weight of the obtained compound was 22,000.

### (Reference Example 3)

The same operation as in Reference Example 1 was performed except that (2-hydroxypropyl)-gamma-cyclodextrin was used instead of (hydroxypropyl)-alpha-cyclodextrin, and 23.6 g of ε-caprolactone was used. The number average molecular weight of the obtained compound was 19,000.

### (Reference Example 4)

4.4 g of β-cyclodextrin was dispersed in 40 mL of pyridine and cooled in an ice bath. Thereafter, 8.8 g of paratoluenesulfonyl chloride was added, and the mixture was reacted in an ice bath for 6 hours. Then, the reaction solution was added to 300 mL of deionized water to precipitate a solid, and the solid was collected using a glass filter. The obtained solid was washed with a large amount of deionized water and diethyl ether, and dried under vacuum to obtain tosylated β-cyclodextrin (hereinafter, referred to as "tosylated β-cyclodextrin"). The tosylation of β-cyclodextrin was confirmed by NMR structural analysis.

Then, 6.65 g of the tosylated β-cyclodextrin obtained above was dissolved in 35 mL of dimethylformamide, and added dropwise over 20 minutes, using a dropping funnel, to 100 mL of 1,2-ethylenediamine heated at 70°C. Then the reaction was further advanced for 3 hours, and the reaction solution was poured into 1 L of chloroform to precipitate a solid. The solid was collected by suction filtration, washed with chloroform, and dried under vacuum to obtain an aminated β-cyclodextrin (referred to as "aminated β-cyclodextrin"). The amination of β-cyclodextrin was confirmed by NMR structural analysis.

Then, 10.0 g of ε-caprolactam was melted under heating at 150°C and under a nitrogen flow, and a solution obtained by dissolving 0.5 g of the above-mentioned aminated β-cyclodextrin and 0.3 g of tin octylate in 0.8 g of toluene was added. After heating stepwise to 210°C, the reaction was advanced at 210°C for 1 hour. The obtained reaction product was poured into 200 mL of methanol to precipitate a solid, and then dried under vacuum to obtain a target polycaproamide-modified cyclodextrin. The structural analysis by NMR confirmed that polycaproamide-modified cyclodextrin was obtained.

### (Reference Example 5)

3.9 g of (2-hydroxypropyl)-beta-cyclodextrin and 3.0 g of sodium hydroxide were dissolved in 90 mL of deionized water and stirred in an ice bath. Then 1.5 g of acrylonitrile was added, and the resulting mixture was reacted for 5 hours in an ice bath. After the reaction solution was neutralized with acetic acid, the reaction solution was adsorbed on 50 g of an adsorption resin (Diaion HP-20 manufactured by Sigma-Aldrich), washed with deionized water, and then extracted with a mixture solvent of methanol: deionized water at 1: 1 (weight ratio). The eluate was concentrated to dryness by an evaporator and dried under vacuum to obtain cyanoethylated β-cyclodextrin. The structural analysis by NMR confirmed that cyanoethylated β-cyclodextrin was obtained.

Then, 3.0 g of the cyanoethylated β-cyclodextrin obtained above was dissolved in 100 mL of deionized water, and 1.4 g of a cobalt catalyst supported on aluminum oxide was added. In the autoclave which was sealed with hydrogen gas of 3 MPa, the temperature was raised to 90°C over 1 hour, and the reaction was further advanced for 5 hours. After the reaction stopped, the solid was removed by filtration through celite, concentrated to dryness by an evaporator, and dried under vacuum to obtain an aminated β-cyclodextrin. The structural analysis by NMR confirmed that aminated β-cyclodextrin was obtained.

Then, 5.0 g of ε-caprolactam was melted under heating at 150°C and under a nitrogen flow, and a solution obtained by dissolving 0.5 g of the above-mentioned aminated β-cyclodextrin and 1.0 g of tin octylate in 1.5 g of toluene was added. After heating stepwise to 210°C, the reaction was advanced at 210°C for 1 hour. The obtained reaction product was poured into 100 mL of methanol to precipitate a solid, and then dried under vacuum to obtain a target polycaproamide-modified cyclodextrin. The structural analysis by NMR confirmed that polycaproamide-modified cyclodextrin was obtained.

### (Evaluation method)

The evaluation methods in each Example and Comparative Example are explained. Unless otherwise specified, the number of evaluations n was n = 3 and the average value was determined.

### (1) Rigidity, toughness, absorbed energy (tensile elastic modulus, tensile elongation at break)

The pellets obtained in each Example and Comparative Example were vacuum-dried at 80°C for 12 hours, and subjected to injection molding using an injection molding machine (Minijet manufactured by HAAKE) under the conditions of a cylinder temperature of 250°C and a mold temperature of 80°C to prepare an ISO527-2-5A dumbbell having a thickness of 2.0 mm. This test piece was subjected to a tensile test in accordance with ISO 527 (2012), using a tensile tester Autograph AG-20kNX (manufactured by Shimadzu Corporation) at a crosshead speed of 100 mm/min, and the tensile elastic modulus and tensile elongation at break were measured. For the sample containing a fibrous filler, a tensile test was performed at a crosshead speed of 5 mm/min to measure the tensile elastic modulus and tensile elongation at break. Further, the amount of absorbed energy was calculated from the strong elongation product from the start of the tensile test to the breaking point.

### (Examples 1 to 10, Comparative Examples 1 to 6; Example 4 is not according to the invention)

A polyamide resin, a modified cyclodextrin, and other components were combined and preblended at the compositions shown in Tables 1 and 2, and supplied to a small kneader (MiniLab, manufactured by HAAKE) which was set at the cylinder temperature of 230°C and at the screw rotation speed of 200 rpm, and then melt kneaded. The extruded gut was pelletized. Tables 1 and 2 show the results of the evaluation of the obtained pellets by the above method. "CD" in the table indicates cyclodextrin.

**[Table 1]**

| | | | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|---|
| Composition | (A-1) Polyamide 6 | Parts by weight | 95 | 95 | 95 | 95 | 95 | 95 | 100 | 95 | 95 | 95 | 95 |
| | (B-1) Modified CD obtained in Reference Example 1 | Parts by weight | 5 | - | - | - | - | - | - | - | - | - | - |
| | (B-2) Modified CD obtained in Reference Example 2 | Parts by weight | - | 5 | - | - | - | - | - | - | - | - | - |
| | (B-3) Modified CD obtained in Reference Example 3 | Parts by weight | - | - | 5 | - | - | - | - | - | - | - | - |
| | (B-4) HPβCD | Parts by weight | - | - | - | 5 | - | - | - | - | - | - | - |
| | (B-5) Modified CD obtained in Reference Example 4 | Parts by weight | - | - | - | - | 5 | - | - | - | - | - | - |
| | (B-6) Modified CD obtained in Reference Example 5 | Parts by weight | - | - | - | - | - | 5 | - | - | - | - | - |
| | (B'-1)PCL | Parts by weight | - | - | - | - | - | - | - | 5 | - | - | - |
| | (B'-2) αCD | Parts by weight | - | - | - | - | - | - | - | - | 5 | - | - |
| | (B'-3) βCD | Parts by weight | - | - | - | - | - | - | - | - | - | 5 | - |
| | (B'-4) Polyrotaxane | Parts by weight | - | - | - | - | - | - | - | - | - | - | 5 |
| Rigidity | Tensile modulus | GPa | 1.64 | 1.67 | 1.60 | 1.63 | 1.83 | 1.86 | 1.55 | 1.40 | 1.62 | 1.52 | 1.47 |
| Toughness | Tensile elongation at break | % | 99.0 | 244.0 | 199.6 | 125.0 | 140.5 | 78.6 | 41.6 | 19.0 | 8.0 | 8.5 | 117.0 |

**[Table 2]**

| | | | Example 7 | Example 8 | Example 9 | Example 10 | Comparative Example 6 |
|---|---|---|---|---|---|---|---|
| Composition | (A-1) Polyamide 6 | Parts by weight | 99 | 97 | 95 | 90 | 70 |
| | (B-2) Modified CD obtained in Reference Example 2 | Parts by weight | 1 | 3 | 5 | 10 | 30 |
| Rigidity | Tensile modulus | GPa | 1.61 | 1.66 | 1.67 | 1.56 | 1.44 |
| Toughness | Tensile elongation at break | % | 101.6 | 230.9 | 244.0 | 60.4 | 35.2 |

The comparison between Examples 1 to 6 and Comparative Examples 1 to 5 show that blending of a specific amount of modified cyclodextrin to polyamide resulted in superior rigidity and toughness compared to polycaprolactone alone and unmodified cyclodextrin. When a specific amount of polyrotaxane was blended, the rigidity and toughness were good, but the resin composition of the present invention composed of a polyamide and a modified cyclodextrin showed further improved toughness. Furthermore, since the raw material cost of polyrotaxane is high, it is advantageous to use a relatively inexpensive modified cyclodextrin.

Furthermore, the comparison of Example 2 and Examples 7 to 10 to Comparative Example 6 shows that blending of the modified cyclodextrin in an amount of 20 parts by weight or less with respect to 100 parts by weight in total of the polyamide and the modified cyclodextrin resulted in excellent rigidity and toughness.

### (Examples 11 and 12, Comparative Example 7)

A polyamide, a modified cyclodextrin, and a glass fiber were combined and preblended at the compositions shown in Table 3, and supplied to a small kneader (MiniLab, manufactured by HAAKE) which was set at the cylinder temperature of 240°C and at the screw rotation speed of 100 rpm, and then melt kneaded. The extruded gut was pelletized. Table 3 shows the results of the evaluation of the obtained pellets by the above method.

**[Table 3]**

| | | | Example 11 | Example 12 | Comparative Example 7 |
|---|---|---|---|---|---|
| Composition | (A-1) Polyamide 6 | Parts by weight | 66.5 | 66.5 | 70 |
| | (B-2) Modified CD obtained in Reference Example 2 | Parts by weight | 3.5 | 3.5 | - |
| | (C-1) Glass fiber | Parts by weight | - | 30 | - |
| | (C-2) Glass fiber | Parts by weight | 30 | - | 30 |
| Rigidity | Tensile modulus | GPa | 4.61 | 4.65 | 4.82 |
| Toughness | Tensile elongation at break | % | 6.2 | 7.3 | 4.9 |
| Energy | Energy (Start of test - breaking point) | J | 26.3 | 31.3 | 24.8 |

The comparison of Examples 11 and 12 to Comparative Example 7 shows that the addition of a specific amount of modified cyclodextrin to polyamide resulted in improved toughness and superior energy absorption while elastic modulus was maintained even in a glass fiber reinforcement system.

## Claims

1. A resin composition comprising at least a polyamide (A) and a modified cyclodextrin (B), wherein said modified cyclodextrin (B) is modified with a thermoplastic resin, and wherein said polyamide (A) is blended in an amount of 80 parts by weight or more and 99.9 parts by weight or less and said modified cyclodextrin (B) is blended in an amount of 0.1 parts by weight or more and 20 parts by weight or less with respect to the 100 parts by weight in total of said polyamide (A) and said modified cyclodextrin (B), and wherein the modified cyclodextrin (B) is not cyclodextrin that forms part of a polyrotaxane.

2. The resin composition according to claim 1, wherein said thermoplastic resin that modifies said modified cyclodextrin (B) is an aliphatic polyester or an aliphatic polyamide.

3. The resin composition according to claim 1 or 2, wherein said modified cyclodextrin (B) is obtained by modifying β-cyclodextrin or γ-cyclodextrin.

4. The resin composition according to claim 2 or 3, wherein said aliphatic polyester is polycaprolactone.

5. The resin composition according to any one of claims 1 to 4, further comprising a fibrous filler (C), wherein said fibrous filler (C) is blended in an amount of 1 to 200 parts by weight with respect to 100 parts by weight in total of said polyamide (A) and said modified cyclodextrin (B).

6. A molded article obtained by molding the resin composition according to any one of claims 1 to 5.

7. A method of producing the resin composition according to any one of claims 1 to 6, comprising at least melt kneading said polyamide (A) and said modified cyclodextrin (B).

## Patentansprüche

1. Harzzusammensetzung, die zumindest ein Polyamid (A) und ein modifiziertes Cyclodextrin (B) umfasst, wobei das modifizierte Cyclodextrin (B) mit einem thermoplastischen Harz modifiziert ist und wobei das Polyamid (A) in einer Menge von 80 Gewichtsteilen oder mehr und 99,9 Gewichtsteilen oder weniger und das modifizierte Cyclodextrin (B) in einer Menge von 0,1 Gewichtsteilen oder mehr und 20 Gewichtsteilen oder weniger in Bezug auf insgesamt 100 Gewichtsteile des Polyamids (A) und des modifizierten Cyclodextrins (B) eingemischt ist und wobei das modifizierte Cyclodextrin (B) kein Cyclodextrin ist, das Teil eines Polyrotaxans bildet.

2. Harzzusammensetzung nach Anspruch 1, wobei das thermoplastische Harz, welches das modifizierte Cyclodextrin (B) modifiziert, ein aliphatischer Polyester oder ein aliphatisches Polyamid ist.

3. Harzzusammensetzung nach Anspruch 1 oder 2, wobei das modifizierte Cyclodextrin (B) durch Modifizieren von β-Cyclodextrin oder γ-Cyclodextrin erhalten wurde.

4. Harzzusammensetzung nach Anspruch 2 oder 3, wobei der aliphatische Polyester ein Polycaprolacton ist.

5. Harzzusammensetzung nach einem der Ansprüche 1 bis 4, die weiters einen faserförmigen Füllstoff (C) umfasst, wobei der faserförmige Füllstoff (C) in einer Menge von 1 bis 200 Gewichtsteilen in Bezug auf insgesamt 100 Gewichtsteile des Polyamids (A) und des modifizierten Cyclodextrins (B) eingemischt ist.

6. Formgegenstand, der durch Formen einer Harzzusammensetzung nach einem der Ansprüche 1 bis 5 erhältlich ist.

7. Verfahren zur Herstellung einer Harzzusammensetzung nach einem der Ansprüche 1 bis 6, das zumindest das Schmelzkneten des Polyamids (A) und des modifizierten Cyclodextrins (B) umfasst.

## Revendications

1. Composition de résine comprenant au moins un polyamide (A) et une cyclodextrine modifiée (B), dans laquelle ladite cyclodextrine modifiée (B) est modifiée avec une résine thermoplastique, et dans laquelle ledit polyamide (A) est mélangé en une quantité de 80 parties en poids ou plus et de 99,9 parties en poids ou moins et ladite cyclodextrine modifiée (B) est mélangée en une quantité de 0,1 partie en poids ou plus et de 20 parties en poids ou moins par rapport aux 100 parties en poids au total dudit polyamide (A) et de ladite cyclodextrine modifiée (B), et dans laquelle la cyclodextrine modifiée (B) n'est pas une cyclodextrine qui fait partie d'un polyrotaxane.

2. Composition de résine selon la revendication 1, dans laquelle ladite résine thermoplastique qui modifie ladite cyclodextrine modifiée (B) est un polyester aliphatique ou un polyamide aliphatique.

3. Composition de résine selon la revendication 1 ou 2, dans laquelle ladite cyclodextrine modifiée (B) est obtenue en modifiant de la β-cyclodextrine ou de la γ-cyclodextrine.

4. Composition de résine selon la revendication 2 ou 3, dans laquelle ledit polyester aliphatique est la polycaprolactone.

5. Composition de résine selon l'une quelconque des revendications 1 à 4, comprenant en outre une charge fibreuse (C), dans laquelle ladite charge fibreuse (C) est mélangée en une quantité de 1 à 200 parties en poids par rapport à 100 parties en poids au total dudit polyamide (A) et de ladite cyclodextrine modifiée (B).

6. Article moulé obtenu par moulage de la composition de résine selon l'une quelconque des revendications 1 à 5.

7. Procédé de production de la composition de résine selon l'une quelconque des revendications 1 à 6, comprenant au moins un malaxage à l'état fondu dudit polyamide (A) et de ladite cyclodextrine modifiée (B).
